# EUROPÄISCHE PATENTSCHRIFT

(11) **EP 1 724 155 B1**
(45) Veröffentlichungstag und Bekanntmachung des Hinweises auf die Patenterteilung: **18.06.2008**
(21) Anmeldenummer: 06007683.3
(22) Anmeldetag: 12.04.2006
(51) Int. Cl.: B60R 7/04

(54) **Rollo mit gekrümmter Oberfläche und Verfahren zur dessen Herstellung**
Roller shutter with curved surface and Method for its production
Volet roulant avec une surface curvée et son procédé de fabrication

(30) Priorität: 19.05.2005 DE 102005023062
(43) Veröffentlichungstag der Anmeldung: 22.11.2006
(73) Patentinhaber: Lisa Dräxlmaier GmbH, 84137 Vilsbiburg (DE)
(72) Erfinder: Strasser, Wolfgang, 84118 Aham (DE); Dobos, Leonhard, 84178 Kröning (DE)
(74) Vertreter: HOFFMANN EITLE

(56) Entgegenhaltungen:
- EP-A- 1 600 330
- DE-A1- 19 923 512
- US-A- 5 752 740
- US-A1- 2003 052 129
- US-A1- 2005 252 317

## Beschreibung

### Feld der Erfindung

Die Erfindung betrifft ein Rollo zum Öffnen und Verschließen einer Ablage, eines Aufbewahrungsfachs, einer Bedienkonsole oder dergleichen, insbesondere zur Verwendung in einem Kraftfahrzeug sowie ein Verfahren zu dessen Herstellung.

### Hintergrund der Erfindung

Vor allem in Kraftfahrzeugen der gehobenen Mittelklasse oder Oberklasse werden hohe Anforderungen an die Optik des Innenraums und hierbei insbesondere an die Verblendung von Bedienelementen, Aufbewahrungsfächern und dergleichen, vor allem im Bereich der Mittelkonsole gestellt. Dabei kommen seit langer Zeit in bestimmten Bereichen von Kraftfahrzeugen Rollos zum Einsatz, die ein verschiebbares Öffnen und Verschließen der abgedeckten Bereiche von Hand erlauben.

Derartige Rollos bestehen üblicherweise aus einer Vielzahl von profilierten und stabförmigen Trägerelementen, die mittels einer elastischen Verbindungsschicht derart miteinander verbunden sind, dass die Trägerelemente in Führungen eingreifen, entlang derer das Öffnen und Verschließen des Rollos erfolgt. Dabei wird üblicherweise während des Öffnens des Rollos aus Platzgründen der Verschiebeweg so ausgestaltet, dass das Rollo aus einer im Wesentlichen horizontalen Ausrichtung mit einem bestimmten Krümmungsradius in eine im Wesentlichen senkrechte Ausrichtung gezwungen wird.

Aus Gründen der Optik tragen die Rollos üblicherweise eine Außenschicht, d.h. eine der zu verschließenden Öffnung abgewandte Oberflächen-Schicht, die nachträglich auf die die lamellenartigen Trägerelemente verbindende elastische Schicht aufgetragen wird. Eine derartige Schicht kann beispielsweise aus Metall, Holz, Leder, Stoff oder Folie bestehen. Diese Dekorschicht ist dabei regelmäßig so beschaffen, dass sie die Anforderungen hinsichtlich einer ansprechenden Optik sowie einer angemessenen Beständigkeit gegen mechanische, atmosphärische oder Lichteinflüsse, schließlich einer ausreichenden Abwaschbarkeit erfüllt.

Die bekannten Dekorschichten erfüllen somit sämtliche an die Optik der Abdeckung von Bedienelementen, Staufächern, Ablagefächern oder dergleichen gestellten Anforderungen, sind jedoch regelmäßig so ausgestaltet, dass sie ohne erhöhten Materialaufwand nicht in der Lage sind, eine große Krafteinwirkung aufnehmen zu können. Dies erschwert den Einsatz von derartigen Rollos im Bereich der Mittelarmlehne oder einer Seitenarmlehne eines Kraftfahrzeugs.

US 2003/052129 A1 offenbart ein Rollo gemäß dem Oberbegriff des Anspruchs 1.

### Aufgabe der Erfindung

Es war daher die Aufgabe der Erfindung, ein Rollo der eingangs genannten Art zur Verfügung zu stellen, welches in der Lage ist, auch große, auf ein geschlossenes Rollo aufgebrachte Kräfte sicher und ohne Materialversagen oder Funktionsstörung aufnehmen zu können.

Diese Aufgabe wird durch ein Rollo mit den Merkmalen des Anspruchs 1 und ein Verfahren mit den Merkmalen des Anspruchs 18 gelöst. Vorteilhafte Ausgestaltungen der Erfindung werden in den abhängigen Ansprüchen 2 bis 17 beschrieben.

Es wird in erfindungsgemäßer Weise ein Rollo insbesondere zur Verwendung in einem Kraftfahrzeug zur Verfügung gestellt, das zum Öffnen und Verschließen der Öffnung einer Ablage, eines Aufbewahrungsfachs, einer Bedienkonsole oder dergleichen dient. Das erfindungsgemäße Rollo weist dabei wenigstens ein Trägerelement sowie mindestens eine auf dem Trägerelement angeordnete Schicht aus elastischem Material auf. Jedes Trägerelement des erfindungsgemäße Rollos weist dabei in seiner Längsrichtung eine Krümmung auf, deren Auslenkung parallel zur und in Richtung der Flächennormalen der vom Rollo zu verschließenden Öffnung verläuft.

Somit wird ein Rollo zur Verfügung gestellt, dessen Trägerelemente die gesamte Breite der vom Rollo zu verschließenden Öffnung überspannen und die gleichzeitig gleichsam bogenförmig diese Öffnung überspannen.

Es hat sich dabei in überraschender Weise herausgestellt, dass durch eine erfindungsgemäße Ausgestaltung der Trägerelemente insbesondere bei geeigneter Ausgestaltung der Führungen für die Trägerelemente eine Steifigkeitserhöhung des gesamten Rollos durch die Überspannung des Unterbaus hergestellt werden kann. Somit kann im Vergleich zur geraden Ausgestaltung der Trägerelemente bei gleicher Materialstärke und Materialfestigkeit eine höhere Steifigkeit des gesamten Rollos erzielt werden, wodurch die maximal mögliche Krafteinleitung senkrecht zur vom Rollo zu verschließenden Öffnung erhöht wird. Hierdurch wird die Einsatzmöglichkeit des erfindungsgemäßen Rollos auch im Bereich von der Mittelarmlehne oder der Seitenarmlehne eines Kraftfahrzeugs mit besonders einfachen Mitteln ermöglicht.

Darüber hinaus ergibt sich durch die gewölbte Ausgestaltung des Rollos eine Volumenvergrößerung eines vom Rollo verschlossenen Stauraums.

In erfindungsgemäßer Weise beschreibt jedes Trägerelement des Rollos eine Krümmung, deren Auslenkung parallel zur Richtung der Flächennormalen der vom Rollo zu verschließenden Öffnung verläuft. Somit folgt jedes Trägerelement einer Bogenform, die im Wesentlichen aus der von der Öffnung aufgespannten Ebene nach außen heraussteht. Die Krümmung selbst ist in ihrer Form nicht eingeschränkt und kann somit beispielsweise einem Kreisbogen- oder Parabelabschnitt folgen.

Die Auslenkung der Krümmung beschreibt dabei die maximale Höhendifferenz zwischen jeweiligen Abschnitten des Trägerelements im Randbereich des Rollos im Vergleich zu einem Bereich zwischen den Randbereichen.

In einer bevorzugten Ausführungsform des erfindungsgemäßen Rollos ist die Auslenkung des Trägerelements in dessen halber Länge maximal ausgestaltet. Somit wird ein Rollo zur Verfügung gestellt, das im Wesentlichen spiegelsymmetrisch ausgestaltet ist und das die auf das Rollo wirkende Kraft besonders gleichmäßig auf die Führungen für das Rollo zu verteilen in der Lage ist. Asymmetrische Lösungen (Auslenkung des Trägerelements ist bei 1/3 dessen Länge maximal) sind jedoch ebenfalls denkbar.

Gemäß einer weiteren bevorzugten Ausführungsform des erfindungsgemäßen Rollos beträgt die Auslenkung der Krümmung mehr als 1 cm und besonders bevorzugt mehr als 2 cm. Somit wird ein Rollo zur Verfügung gestellt, welches zum einen die Steifigkeit verglichen mit geraden Rollos deutlich erhöht und zum anderen keine nachteiligen Auswirkungen auf die Haptik des Rollos sowie die Einsetzbarkeit des Rollos im Bereich von Armablagen bereithält.

In einer weiteren bevorzugten Ausführungsform des erfindungsgemäßen Rollos weisen die Trägerelemente Mittel auf, die in zwei einander gegenüberliegenden Seitenwänden der zu verschließenden Öffnung angeordneten Führungen gleitbar gelagert sind. Somit wird in besonders einfacher Weise ein Rollo zur Verfügung gestellt, welches sicher in den Führungen gelagert ist und darüber hinaus ein Verschieben des Rollos ohne große Kraftanstrengung ermöglicht.

In einer weiteren bevorzugten Ausführungsform des erfindungsgemäßen Rollos weist dieses eine Vielzahl parallel zueinander angeordneter Trägerelemente auf, die mittels wenigstens einer elastischen Schicht miteinander verbunden sind. In einer besonders bevorzugten Ausführungsform sind die Trägerelemente dabei mit gleichem Abstand zueinander angeordnet. Hierdurch wird ein Rollo zur Verfügung gestellt, welches die für die Anwendung notwendige Festigkeit aufweist, einfach und in nahezu beliebiger Länge herstellbar ist und gleichzeitig der Verschiebung des Rollos auch entlang eines gekrümmten Verschiebewegs im Wesentlichen nur den Widerstand entgegensetzt, der zur Biegung der elastischen Schicht erforderlich ist.

In einer weiteren bevorzugten Ausführungsform des erfindungsgemäßen Rollos besteht jedes Trägerelement aus stabförmigen, profilierten Einzelelementen. Diese können aus jedem Material erzeugt sein, welches eine ausreichende Steifigkeit und Temperaturwechselbeständigkeit bei den in einem Fahrzeuginnenraum erwarteten Temperaturschwankungen aufweist. Denkbar sind Holz, Metall oder Kunststoff, wobei geeignete Kunststoffe aufgrund ihres vergleichsweise niedrigen Gewichts und ihrer nahezu beliebigen Formbarkeit bevorzugt sind.

In einer besonders bevorzugten Ausgestaltung der Erfindung weisen die Trägerelemente an ihrer Unterseite, somit der Seite, die der Ablage, dem Aufbewahrungsfach, der Bedienkonsole oder dergleichen zugewandt ist, mindestens zwei, besonders bevorzugt drei zueinander parallel angeordnete Versteifungsrippen auf. Hierdurch wird die Steifigkeit jedes Trägerelements bei besonderer Beachtung der Materialersparnis besonders vorteilhaft unterstützt.

Das erfindungsgemäße Rollo ist besonders vorteilhaft im Bereich der Mittelarmlehne und/oder einer Türarmlehne sowohl im Fahrer-/Beifahrer- als auch im Fondbereich eines Kraftfahrzeugs einsetzbar. Besonders bevorzugt kann das erfindungsgemäße Rollo dabei eine Druckkraft von mehr als 700 N, insbesondere bevorzugt mehr als 800 N aufnehmen, um somit den an Armauflagen in Kraftfahrzeugen gestellten Anforderungen begegnen zu können.

In einer weiteren vorteilhaften Ausgestaltung des erfindungsgemäßen Rollos weist dieses zudem eine Polsterung auf, wodurch besonders im Bereich von Armauflagen das Rollo auch als Teil der Armauflage dienen kann, ohne dabei dem Fahrzeuginsassen eine harte Armauflage zur Verfügung stellen zu müssen.

Somit kann das erfindungsgemäße Rollo auch so in der Mittelarmlehne und/oder der Seitenarmlehne eines Kraftfahrzeugs angebracht sein, dass seine gepolsterte Oberfläche fluchtend mit einer das Rollo etwaig umgebenden gepolsterten Armauflage angebracht ist. Somit wird eine maximale Stauraumauslastung durch das erfindungsgemäße Rollo auch im Bereich von Armauflagen vorteilhaft unterstützt.

Bezüglich gepolsterter Rollos wird zudem Bezug genommen auf die deutsche Patentanmeldung mit dem Aktenzeichen 10 2005 006 119.2-21, deren auf gepolsterte Rollos gerichtete Bestandteile somit Gegenstand der vorliegenden Anmeldung sind.

In einer besonders bevorzugten Ausführungsform weist die Polsterung einen Gasvolumenanteil auf, der vorzugsweise mindestens 20%, besonders bevorzugt 75 bis 96% des von der Polsterung beanspruchten Volumens beträgt. Eine derartige Ausgestaltung ist beispielsweise bei Verwendung eines geeigneten Schaumstoffs für die Polsterung verwirklicht.

Damit wird ein Rollo zur Verfügung gestellt, welches neben einer besonders vorteilhaften Haptik zudem wärme- und/oder schallisolierende Eigenschaften aufweisen kann, wobei dieses Rollo besonders vorteilhaft zur Abdeckung eines klimatisierten Bereichs, beispielsweise eines Kühl- oder Warmhaltefachs dienen kann.

In einer weiteren besonders bevorzugten Ausgestaltung der Erfindung umfasst die Polsterung eine oder mehrere Kammern, die mit einem Gas, einer Flüssigkeit oder einer geeigneten Feststoffpartikel-Füllung befüllt sein können. Besonders vorteilhaft ist dabei die Befüllung der einzelnen Kammern mit einem Gel. In allen Fällen jedoch kann die Haptik des erfindungsgemäßen Rollos besonders einfach und genau und überdies in verschiedenen Bereichen auch unterschiedlich eingestellt werden.

In einer weiteren besonders bevorzugten Ausgestaltung des erfindungsgemäßen Rollos ist die Polsterung dabei derart ausgestaltet, dass sie in den Seitenbereichen des Rollos stärker ausgestaltet ist als im Bereich der maximalen Auslenkung der Krümmung. In einer ganz besonders bevorzugten Ausgestaltung ist die Polsterungsstärke derart auf die Auslenkung der gekrümmten Trägerelemente abgestimmt, dass die Krümmung der Trägerelemente im Wesentlichen ausgeglichen ist.

Hierdurch wird ein Rollo zur Verfügung gestellt, welches sämtliche Vorteile einer gekrümmten Ausführungsform der Trägerelemente bereithält und gleichzeitig den Fahrzeuginsassen dann ein im Wesentlichen ebenes Erscheinungsbild des geschlossenen Rollos zur Verfügung stellt, wenn dies aus Gründen der Optik und/oder der Haptik des vom Rollo zu verschließenden Bereich gewünscht ist.

In einer weiteren vorteilhaften Ausgestaltung des erfindungsgemäßen Rollos weist dieses oberhalb der elastischen Schicht oder ggf. oberhalb einer oder mehrerer Polsterungen eine abschließende Dekorschicht auf. Derartige Dekore sind besonders im Fahrzeugbau weit verbreitet und können Holz, Kunststoff, Stoffe, Metall oder dergleichen umfassen.

In einer besonders bevorzugten Ausführungsform der Erfindung besteht die Dekorschicht jedoch aus Leder oder einem lederähnlichen Material. Hierdurch wird ein Material zur Verfügung gestellt, welches den an die Optik und Haptik von Fahrzeuginnenräumen gestellten Anforderungen besonders gut entspricht. Das Leder kann dabei glatt oder an geeigneten Ort mit Steppnähten versehen auf dem Rollo angebracht sein. Darüber hinaus ist auch eine Anordnung des Leders in der Art eines sogenannten "Raffleders" geeignet, bei dem sich im geraden, somit entspannten Zustand der elastischen Verbindungsschicht des Rollos ein gewünschter Faltenwurf des Leders zeigt und sich bei Krümmung des Rollos das Leder glatt zieht, ohne dabei das Material übermäßig zu belasten.

Gemäß eines weiteren Aspekts der vorliegenden Erfindung wird ein Verfahren zur Herstellung eines oben beschriebenen Rollos zur Verfügung gestellt, bei dem mehrere Trägerelemente mit wenigstens einer elastischen Schicht miteinander verbunden werden, ggf. wenigstens eine Polsterung sowie eine Dekorschicht auf die elastische Schicht aufgebracht wird und wenigstens eine Klebstoffschicht übereinander angeordnete Schichten miteinander verbindet. Gemäß der Erfindung erfolgt dabei das Aufbringen einer eine Klebstoffschicht bedeckenden Schicht derart, dass ein erster Anpressdruck entlang einer Mittellinie der Schicht erfolgt und anschließend der abschließende Anpressdruck von dieser Mittellinie aus von innen nach außen auf die Schicht aufgebracht wird.

Somit wird ein Verfahren zur Verfügung gestellt, das sicher gewährleistet, dass eine dauerhafte Verbindung zweier übereinander angeordneter Schichten ohne nennenswerten Faltenwurf und ohne Einschluss etwaiger Luftpolster erfolgt.

### Kurze Beschreibung der Zeichnungen

Die Erfindung wird nunmehr anhand einiger bevorzugter Ausführungsformen detailliert beschrieben, wobei diese Ausführungsformen nicht dazu geeignet sind, den allgemeinen Grundgedanken der Erfindung sowie den Schutzbereich der ausschließlich in den anhängigen Ansprüchen angegeben ist, zu beschränken.

In den Figuren zeigen:
Fig. 1 eine Querschnittsansicht einer ersten Ausführungsform der Erfindung;
Fig. 2 eine Querschnittsansicht einer zweiten Ausführungsform der Erfindung; und
Fig. 3 eine Querschnittsansicht einer dritten Ausführungsform der Erfindung.

### Wege zur Ausführung der Erfindung

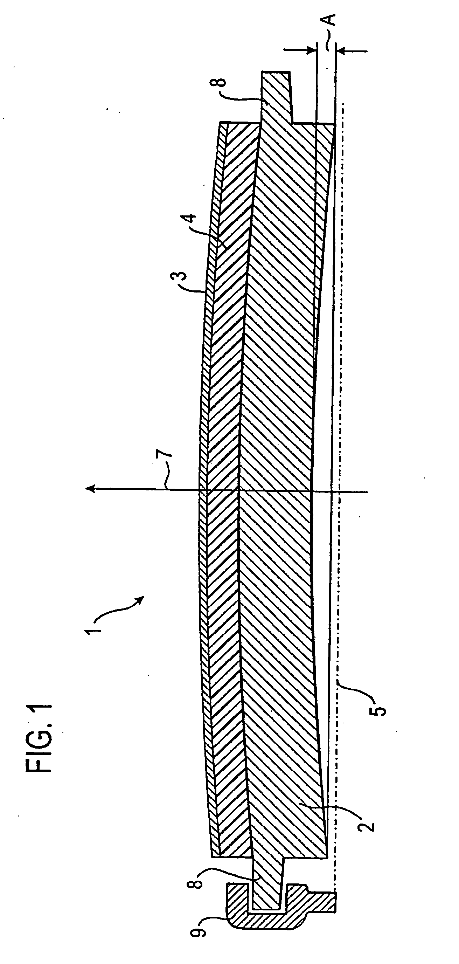

Fig. 1 zeigt eine Querschnittsansicht eines erfindungsgemäßen Rollos 1, welches im Wesentlichen aus einem gekrümmten Trägerelement 2 sowie einer elastischen Schicht 3 besteht, wobei unterhalb der elastischen Schicht 3 zudem eine Polsterschicht 4 angeordnet ist. Das Rollo 1 überspannt dabei eine Öffnung, die eine Ebene aufspannt, die mittels der strichpunktierten Linie 5 dargestellt ist. Die Auslenkung A der Krümmung des Trägerelements 2 ist dabei parallel zur und in Richtung der Flächennormalen 7 dieser Ebene 5 angeordnet. Das Trägerelement 2 weist zudem an seinen Seitenbereichen Mittel 8 zum Eingreifen in Führungen 9 auf, die ihrerseits an den die Öffnung umgebenden Seitenwänden angebracht sind. Aus Gründen der Vereinfachung der Zeichnung ist hierbei lediglich eine derartige Führung 9 dargestellt.

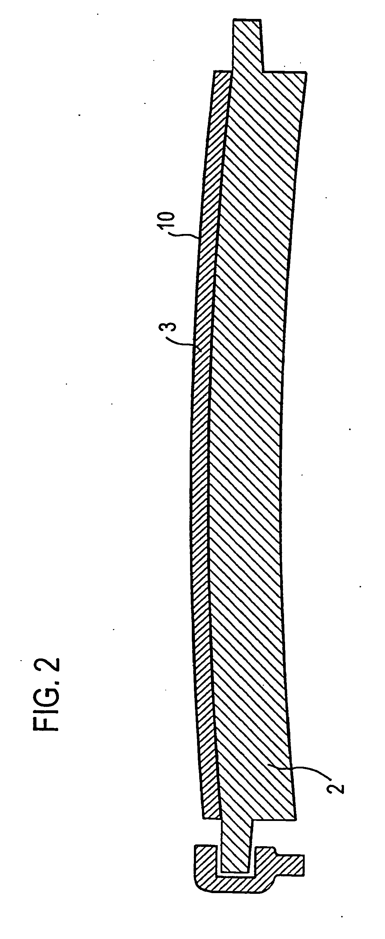

Fig. 2 zeigt den Querschnitt eines erfindungsgemäßen Rollos, bestehend aus einem gekrümmten Trägerelement 2 und einer diese Trägerelemente 2 miteinander verbindenden weichen elastischen Schicht 3. Auf der Oberseite dieser elastischen Schicht 3 ist zudem eine dünne Folie 10 als Dekorschicht angeordnet.

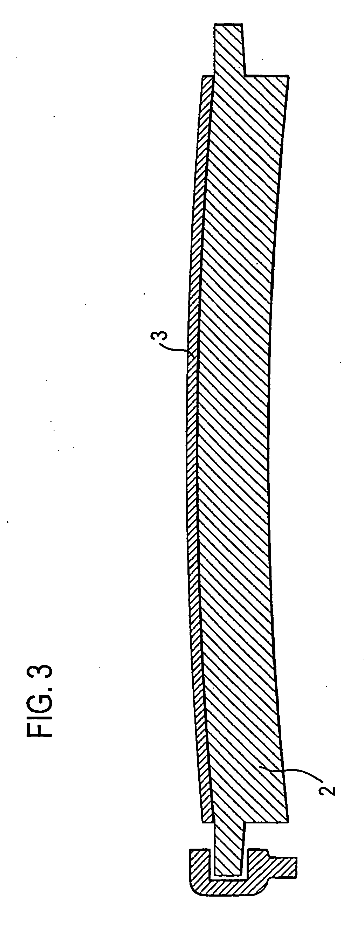

In Fig. 3 wird ein Querschnitt eines erfindungsgemäßen Rollos dargestellt, dessen Trägerelement 2 eine ähnliche Krümmung beschreibt wie in den Figuren 1 und 2 dargestellt. Nebeneinander parallel angeordnete Trägerelemente 2 sind dabei mittels einer Schicht aus Leder 3, die hier als elastische Schicht dient, miteinander verbunden.

## Patentansprüche

1. Rollo (1) zum Öffnen und Verschließen der Öffnung einer Ablage, eines Aufbewahrungsfachs, einer Bedienkonsole oder dergleichen, insbesondere zur Verwendung in Kraftfahrzeugen, mit wenigstens einem Trägerelement (2) sowie mindestens einer auf dem oder den Trägerelement(en) (2) angeordneten Schicht (3) aus elastischem Material,
**dadurch gekennzeichnet, dass**
jedes Trägerelement (2) an seiner Aussenseite und seiner Innenseite in seiner Längsrichtung eine Krümmung nach aussen aufweist, wobei Auslenkung (A) der Innenseite parallel zur und in Richtung der Flächennormalen (7) der von dem Rollo (1) zu verschließenden Öffnung verläuft.

2. Rollo (1) gemäß Anspruch 1, **dadurch gekennzeichnet, dass** die Auslenkung (A) bei der halben Länge des Trägerelements (2) maximal ist.

3. Rollo (1) gemäß einem der voranstehenden Ansprüche, **dadurch gekennzeichnet, dass** die Auslenkung (A) mehr als 1cm, vorzugsweise mehr als 2cm beträgt.

4. Rollo (1) gemäß einem der voranstehenden Ansprüche, **dadurch gekennzeichnet, dass** das oder die Trägerelement(e) (2) Mittel (8) umfasst, die in zwei einander gegenüberliegenden Seitenwänden der durch das Rollo (1) zu verschließenden Öffnung angeordneten Führungen (9) gleitbar gelagert sind.

5. Rollo (1) gemäß einem der voranstehenden Ansprüche, **dadurch gekennzeichnet, dass** das Rollo (1) eine Vielzahl parallel zueinander angeordneter, mittels wenigstens einer elastischen Schicht (3) miteinander verbundener Trägerelemente (2) aufweist.

6. Rollo (1) gemäß Anspruch 5, **dadurch gekennzeichnet, dass** die Trägerelemente (2) gleich beabstandet zueinander angeordnet sind.

7. Rollo (1) gemäß einem der voranstehenden Ansprüche, **dadurch gekennzeichnet, dass** jedes Trägelement (2) aus stabförmigen, profilierten Einzelelementen besteht.

8. Rollo (1) gemäß Anspruch 7, **dadurch gekennzeichnet, dass** das oder die Trägerelement(e) (2) an ihrer der Ablage, dem Aufbewahrungsfach, der Bedienkonsole oder dergleichen zugewandten Seite mindestens zwei, vorzugsweise drei parallele Versteifungsrippen aufweisen.

9. Rollo (1) gemäß einem der voranstehenden Ansprüche, **dadurch gekennzeichnet, dass** das Rollo (1) im Bereich der Mittelarmlehne und/oder einer Türarmlehne eines Kraftfahrzeugs angeordnet ist.

10. Rollo (1) gemäß Anspruch 9, **dadurch gekennzeichnet, dass** das Rollo (1) eine Druckkraft von mehr 700N, vorzugsweise mehr als 800N aufnehmen kann.

11. Rollo (1) gemäß einem der voranstehenden Ansprüche, **dadurch gekennzeichnet, dass** das Rollo (1) eine Polsterung (4) aufweist.

12. Rollo (1) gemäß Anspruch 11, **dadurch gekennzeichnet, dass** die Polsterung (4) einen Gasvolumenanteil aufweist, der vorzugsweise mindestens 20%, besonders bevorzugt 75 - 96% beträgt.

13. Rollo (1) gemäß einem der Ansprüche 11 und 12, **dadurch gekennzeichnet, das**s die Polsterung (4) eine oder mehrere Kammern umfasst.

14. Rollo (1) gemäß einem der Ansprüche 11 - 13, **dadurch gekennzeichnet, dass** die Polsterung (4) derart ausgestaltet ist, dass sie in den Seitenbereichen des Rollos (1) stärker ausgestaltet ist als im Bereich der maximalen Auslenkung (A).

15. Rollo (1) gemäß Anspruch 14, **dadurch gekennzeichnet, dass** die unterschiedliche Ausgestaltung der Polsterungsstärke die Auslenkung (A) im Wesentlichen ausgleicht.

16. Rollo (1) gemäß einem der voranstehenden Ansprüche, **dadurch gekennzeichnet, dass** das Rollo (1) eine abschließende Dekorschicht aufweist.

17. Rollo (1) gemäß Anspruch 16, **dadurch gekennzeichnet, dass** die Dekorschicht aus Leder oder einem lederähnlichen Material besteht.

18. Verfahren zur Herstellung eines Rollos (1) gemäß einem der voranstehenden Ansprüche, aufweisend die Schritte:
- Verbinden mehrerer Trägerelemente (2) mittels wenigstens einer elastischen Schicht (3),
- Aufbringen wenigstens einer Klebstoffschicht,
- ggf. Aufbringen wenigstens einer Polsterung (4),
- ggf. Aufbringen einer Dekorschicht,
**dadurch gekennzeichnet, dass**
das Aufbringen einer eine Klebstoffschicht bedeckenden Schicht derart erfolgt, dass ein Initialdruck entlang einer Mittellinie der Schicht aufgebracht wird und anschließend der Anpressdruck von innen nach außen aufgebracht wird.

## Claims

1. Roller blind (1) for opening and closing the opening of a glove compartment, a storage compartment, a control panel or the like, in particular for use in motor vehicles, having at least one support element (2) and at least one layer (3) of resilient material arranged on the support element or elements (2), **characterised in that** each support element (2) has an outward curvature on its outer side and its inner side in its longitudinal direction, wherein deflection (A) of the inner side runs parallel to and in the direction of the surface normal (7) of the opening to be closed by the roller blind (1).

2. Roller blind (1) according to claim 1, **characterised in that** the deflection (A) is maximum at half the length of the support element (2).

3. Roller blind (1) according to one of the preceding claims, **characterised in that** the deflection (A) is more than 1 cm, preferably more than 2 cm.

4. Roller blind (1) according to one of the preceding claims, **characterised in that** the support element or elements (2) comprises means (8) which are mounted to be slidable in two guides (9) arranged on side walls, which are opposite one another, of the opening to be closed by the roller blind (1).

5. Roller blind (1) according to one of the preceding claims, **characterised in that** the roller blind (1) has a plurality of support elements (2) arranged parallel to one another and connected to one another by means of at least one resilient layer (3).

6. Roller blind (1) according to claim 5, **characterised in that** the support elements (2) are arranged at equal distances from one another.

7. Roller blind (1) according to one of the preceding claims, **characterised in that** each support element (2) consists of rod-like, profiled individual elements.

8. Roller blind (1) according to claim 7, **characterised in that** the support element or elements (2) have on their side facing the glove compartment, the storage compartment, the control panel or the like, at least two, preferably three, parallel stiffening ribs.

9. Roller blind (1) according to one of the preceding claims, **characterised in that** the roller blind (1) is arranged in the region of the central armrest and/or of a door armrest of a motor vehicle.

10. Roller blind (1) according to claim 9, **characterised in that** the roller blind (1) may absorb a compressive force of more than 700 N, preferably more than 800 N.

11. Roller blind (1) according to one of the preceding claims, **characterised in that** the roller blind (1) has a padding (4).

12. Roller blind (1) according to claim 11, **characterised in that** the padding (4) has a gas volume portion which is preferably at least 20%, particularly preferably 75 - 96%.

13. Roller blind (1) according to one of claims 11 and 12, **characterised in that** the padding (4) comprises one or more chambers.

14. Roller blind (1) according to one of claims 11 - 13, **characterised in that** the padding (4) is designed such that it is designed to be thicker in the side regions of the roller blind (1) than in the region of the maximum deflection (A).

15. Roller blind (1) according to claim 14, **characterised in that** the different design of the padding thickness essentially compensates for the deflection (A).

16. Roller blind (1) according to one of the preceding claims, **characterised in that** the roller blind (1) has a sealing decorative layer.

17. Roller blind (1) according to claim 16, **characterised in that** the decorative layer consists of leather or a leather-like material.

18. Process for producing a roller blind (1) according to one of the preceding claims, having the steps:
- connecting several support elements (2) by means of at least one resilient layer (3),
- applying at least one adhesive layer,
- optionally applying at least one padding (4),
- optionally applying a decorative layer,
**characterised in that** the application of a layer covering an adhesive layer is effected such that an initial pressure is applied along a central line of the layer and then the contact pressure is applied from inside to out.

## Revendications

1. Volet roulant (1), pour ouvrir et fermer l'ouverture d'un reposoir, d'un compartiment de conservation, d'une console de commande ou analogue, en particulier pour utilisation dans des véhicules automobiles, avec au moins un élément support (2), ainsi qu'au moins une couche (3) en matériau élastique, disposée sur le ou les élément(s) support (2),
**caractérisé en ce que**
chaque élément support (2) présente, sur sa face extérieure et sa face intérieure, en direction longitudinale, une courbure orientée vers l'extérieur, une déviation (A) de la face intérieure s'étendant parallèlement à et en direction de la normale à la surface (7) de l'ouverture devant être fermée par le volet roulant (1).

2. Volet roulant (1) selon la revendication 1, **caractérisé en ce que** la déviation (A) est maximale à la mi-longueur de l'élément support (2).

3. Volet roulant (1) selon l'une des revendications précédentes, **caractérisé en ce que** la déviation (A) est d'une valeur supérieure à 1 cm, de préférence supérieure à 2 cm.

4. Volet roulant (1) selon l'une des revendications précédentes, **caractérisé en ce que** le ou les élément(s) support (2) comprend/comprennent des moyens (8), montés à coulissement dans des guidages (9) disposés dans deux parois latérales, opposées l'une à l'autre, de l'ouverture à fermer au moyen du volet roulant (1).

5. Volet roulant (1) selon l'une des revendications précédentes, **caractérisé en ce que** le volet roulant (1) présente une pluralité d'éléments support (2) disposés parallèlement les uns aux autres, reliés ensemble au moyen d'au moins une couche (3) élastique.

6. Volet roulant (1) selon la revendication 5, **caractérisé en ce que** les éléments support (2) sont disposés les uns par rapport aux autres selon un espacement identique.

7. Volet roulant (1) selon l'une des revendications précédentes, **caractérisé en ce que** chaque élément support (2) est composé d'éléments individuels profilés, en forme de barre.

8. Volet roulant (1) selon la revendication 7, **caractérisé en ce que** le ou les élément(s) support (2) présente(nt), sur leur face tournée vers le reposoir, le compartiment de conservation, la console de commande ou analogue, au moins deux, de préférence trois nervures de rigidification parallèles.

9. Volet roulant (1) selon l'une des revendications précédentes, **caractérisé en ce que** le volet roulant (1) est disposé dans la zone de l'accoudoir central et/ou d'un accoudoir de portière d'un véhicule automobile.

10. Volet roulant (1) selon la revendication 9, **caractérisé en ce que** le volet roulant (1) peut supporter une force de compression supérieure à 700 N, de préférence supérieure à 800 N.

11. Volet roulant (1) selon l'une des revendications précédentes, **caractérisé en ce que** le volet roulant (1) présente un rembourrage (4).

12. Volet roulant (1) selon la revendication 11, **caractérisé en ce que** le rembourrage (4) présente une proportion de volume gazeux de préférence d'au moins 20 %, de façon particulièrement préférée de 75 à 96%.

13. Volet roulant (1) selon l'une des revendications 11 et 12, **caractérisé en ce que** le rembourrage (4) comprend une ou plusieurs chambre(s).

14. Volet roulant (1) selon l'une des revendications 11 à 13, **caractérisé en ce que** le rembourrage (4) est réalisé de manière à être plus fort, dans les zones latérales du volet roulant (1), que dans la zone de la déviation (A) maximale.

15. Volet roulant (1) selon la revendication 14, **caractérisé en ce que** la configuration différente de l'épaisseur du rembourrage compense pratiquement la déviation (A).

16. Volet roulant (1) selon l'une des revendications précédentes, **caractérisé en ce que** le volet roulant (1) présente une couche de décoration de fermeture.

17. Volet roulant (1) selon la revendication 16, **caractérisé en ce que** la couche de décoration est composée de cuir ou d'un matériau analogue à du cuir.

18. Procédé de fabrication d'un volet roulant (1) selon l'une des revendications précédentes, présentant les étapes de :
- liaison de plusieurs éléments support (2) au moyen d'au moins une couche (3) élastique,
- application d'au moins une couche d'adhésif,
- le cas échéant, application d'au moins un rembourrage (4),
- le cas échéant, application d'une couche de décoration,
**caractérisé en ce que**
l'application d'une couche couvrant la couche d'adhésif s'effectue de manière qu'une pression initiale soit appliquée le long d'une ligne médiane et que, ensuite, la pression de pressage soit appliquée, de l'intérieur vers l'extérieur.
